# EUROPEAN PATENT APPLICATION

(11) **EP 4 421 648 A1**
(43) Date of publication of application: **28.08.2024**
(21) Application number: 21961275.1
(22) Date of filing: 31.12.2021
(51) Int. Cl.: G06F 16/13

(54) **DOCUMENT TASK PROCESSING**

(30) Priority: 22.10.2021 CN 202111234113
(71) Applicant: Beijing Kingsoft Office Software, Inc., Beijing 100085 (CN); Zhuhai Kingsoft Office Software Co., Ltd, Zhuhai, Guangdong 519080 (CN)
(72) Inventor: GE, Xiazhi, Zhuhai, Guangdong 519080 (CN); CHEN, Changling, Zhuhai, Guangdong 519080 (CN); YAO, Wenying, Zhuhai, Guangdong 519080 (CN); WANG, Hui, Zhuhai, Guangdong 519080 (CN)
(74) Representative: Bandpay & Greuter
(86) International application number: PCT/CN2021/143562
(87) International publication number: WO 2023/065537

(57) **Abstract**

A method and apparatus for processing a document task, an electronic device, and a storage medium are provided. The method comprises: determining (101) a first device from the master device and the slave devices; allocating (102) an operating-type task for the target document to the first device, to enable the first device to process the operating-type task for the target document; and allocating (103) a presenting-type task for the target document to a second device in the master device and the slave device, to enable the second device to process the presenting-type task for the target document. The method for processing a document task provided in the present disclosure is simple and convenient to operate, improves the processing efficiency of the same document, and enhances the user experience.

## Description

### TECHNICAL FIELD

The present disclosure relates to the field of data processing technology, and in particular to document task processing methods and apparatuses, electronic devices, and storage media.

### BACKGROUND

In data processing, improvements in data accuracy and data processing efficiency are increasingly important. Multi-device collaborative processing plays an important role in improving processing efficiency.

In related technology, in order to view and edit data conveniently, a display interface of data on a terminal device usually needs to be projected to another large-screen device via a wireless or wired connection, where the another large-screen device may be a monitor, a television, a tablet computer, and the like. In this processing method, the data processing task is not split, but corresponding task processing of data is performed on the terminal device, other large-screen devices do not have the authority to operate and process the data, resulting in lower efficiency of data processing. Further, the display screen of the intelligent terminal device is getting smaller and smaller, on the same intelligent terminal, processing and displaying at the same time on the same document is not convenient, which results in the lower efficiency of data processing and poor user experience.

### SUMMARY

In view of this, the present disclosure proposes methods and apparatuses for processing a document task, electronic devices, and storage media.

In the first aspect, the present disclosure provides a method for processing a document task, including: determining a first device in a master device and a slave device, where the master device initiates flowing for a target document, the slave device receives the target document, and the first device is used to perform an operation on the target document; allocating an operating-type task for the target document to the first device, to enable the first device to process the operating-type task for the target document; and allocating a presenting-type task for the target document to a second device in the master device and the slave device, to enable the second device to process the presenting-type task for the target document.

In the second aspect, the present disclosure provides an apparatus for processing a document task, including: a determining module, configured to determine a first device in a master device and a slave device, where the master device initiates flowing for a target document, the slave device receives the target document, and the first device is used to perform an operation on the target document; a first allocating module, configured to allocate an operating-type task for the target document to the first device, to enable the first device to process the operating-type task for the target document; and a second allocating module, configured to allocate a presenting-type task for the target document to a second device in the master device and the slave device, to enable the second device to process the presenting-type task for the target document.

In the third aspect, the present disclosure provides an electronic device, including: one or more processors, one or more memories, and a bus, where the one or more processors and the one or more memories communicate with each other via the bus; and the one or more memories store program instructions executable by the one or more processors, and the one or more processors invoke the program instructions to perform the method for processing a document task according to the above first aspect.

In the fourth aspect, the present disclosure provides a non-transitory computer-readable storage medium, where the non-transitory computer-readable storage medium stores computer instructions, and the computer instructions enable a computer to perform the method for processing a document task according to the above first aspect.

The present disclosure provides a method and apparatus for processing a document task, an electronic device, and a storage medium. A first device is determined from the master device and the slave device(s); and then an operating-type task for the target document is allocated to the first device, to enable the first device to process the operating-type task for the target document; and a presenting-type task for the target document is allocated to a second device in the master device and the slave device(s), to enable the second device to process the presenting-type task for the target document. The method for processing a document task provided in the present disclosure splits the tasks for the document, which is simple and convenient to operate, improves the processing efficiency of the same document, and enhances the user experience.

### BRIEF DESCRIPTION OF DRAWINGS

In order to more clearly illustrate the technical solutions according to the embodiments of the present disclosure, drawings that need to be used in the description of the embodiments will be briefly introduced below. The drawings in the following description only relate to some embodiments of the present disclosure. For those skilled in the art, other drawings can also be obtained based on these drawings without creative effort.
FIG. 1 is a schematic flowchart of a method for processing a document task according to embodiments of the present disclosure.
FIG. 2 is a schematic diagram of manually initiating flowing to determine a slave device according to embodiments of the present disclosure.
FIG. 3 is a schematic diagram of automatically initiating flowing to determine a slave device according to embodiments of the present disclosure.
FIG. 4 is a schematic flowchart of task allocating for multi-person and multi-device according to embodiments of the present disclosure.
FIG. 5 is a schematic diagram of a method for determining a first device according to embodiments the present disclosure.
FIG. 6 is a schematic diagram of a method for determining a first device according to embodiments the present disclosure.
FIG. 7 is a schematic diagram of a specific application for a slide show according to embodiments of the present disclosure.
FIG. 8 is a schematic diagram of a specific application for document editing according to embodiments of the present disclosure.
FIG. 9 is a schematic diagram of a plurality of first devices operating on a target document according to embodiments of the present disclosure.
FIG. 10 is a schematic diagram of collaborative processing between a first device and a second device according to embodiments of the present disclosure.
FIG. 11 is a schematic diagram of a specific application of modifying a part of a slide according to embodiments of the present disclosure.
FIG. 12 is a schematic structural diagram of an apparatus for processing a document task according to embodiments of the present disclosure.
FIG. 13 is a schematic structural diagram of an electronic device according to embodiments of the present disclosure.

### DETAILED DESCRIPTION

In order to make the purpose, technical solutions and advantages of the embodiments of the present disclosure clearer, the technical solutions in the embodiments of the present disclosure are clearly described below with reference to the accompanying drawings in the embodiments of the present disclosure. The embodiments described are merely some embodiments of the present disclosure, and not all embodiments. Other embodiments achieved by those skilled in the art according to the embodiments in the present disclosure without paying creative work shall all fall within the scope of protection of the present disclosure.

In order to better understand the technical contents of the present disclosure, some technical terms in the field are briefly introduced.

Master device: a device that is associated with a target document and initiates flowing for the target document. The device associated with the target document may be a device that can obtain the target document, such as a device storing the target document in advance, a device that can obtain the target document from a cloud server, or a device that can obtain the target document through other means.

Slave device: a device that receives flowing for the target document, and a part of tasks for the target document transmitted by the master device may be performed on the device.

Flowing: an action of transferring a part of tasks for the target document from the master device to the slave device.

First device: a device that is used to perform operations on the target document, i.e., a device that performs an operating-type task after flowing is initiated. The master device can be the first device. Alternatively, a device suitable for handheld operation by the user in the master device and the slave device is the first device.

Second device: a device that is used for displaying the target document, i.e., a device that performs the presenting-type task is the second device.

Operating-type task: a task that performs an operation on the target document, such as an editing operation (e.g., deleting, adding, drawing lines, switching, bold processing on a target text, etc.), a presentation operation (e.g., turning to the next page, clicking the link, etc.), and other tasks.

presenting-type task: a task that performs displaying on the target document, such as displaying, playing, and other tasks.

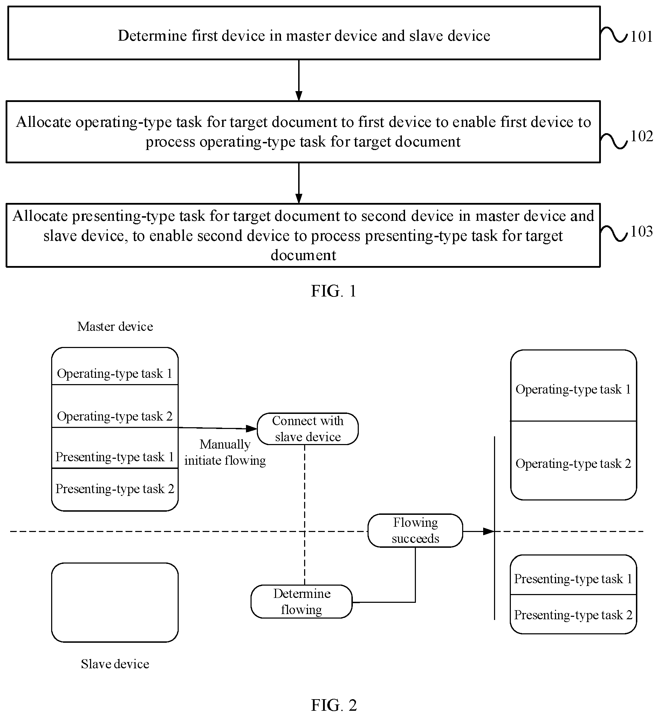

FIG. 1 is a schematic flowchart of a method for processing a document task according to embodiments of the present disclosure. As shown in FIG. 1, the method for processing a document task includes following steps 101-103.

In step 101, a first device is determined in a master device and a slave device.

In this embodiment, the target document is a document that can be processed by a plurality of devices, such as a PPT presentation document in a projecting operation. The master device is a device that initiates flowing for the target document and stores the target document in advance, the slave device is a device that receives the flowing and can execute a task for the target document after flowing, and the first device is a device that is used to perform an operation on the target document.

The task for the target document is a task associated with the target document that can be executed by the master device or the slave device. For example, the task may include an operating-type task and a presenting-type task for processing the target document. In order to more reasonably utilize resources of different devices, different tasks for the target document may be allocated to different devices for execution. This process is also referred to as the flowing of the tasks for the document.

The first device is the device that performs the operating-type task for the target document. The first device may be either a master device or a slave device, and thus the first device that performs the operating-type task for the target document needs to be determined in this step.

After the first device is determined, the remaining devices other than the first device may perform the presenting-type tasks for the target document. The presenting-type task is such as a displaying task or a playing task, the displaying task is a processing method of displaying the data content of the target document, such as displaying a Word document, and the playing task may be a processing method of scrolling display page by page, such as playing a slide show, and so on. In an embodiment, the presenting-type task may further include playing video, audio, etc. of the target document.

It should be noted that both the master device and the slave device can be intelligent terminal devices. For example, the master device is a cell phone terminal, and the slave device is a tablet terminal. A type of the target document may be text, slides, tables, etc.

In step 102, an operating-type task for the target document is allocated to the first device, to enable the first device to process the operating-type task for the target document.

In step 103, a presenting-type task for the target document is allocated to a second device in the master device and the slave device, to enable the second device to process the presenting-type task for the target document.

In an embodiment, after the master device A initiates the flowing for the target document, the master device A determines, according to basic information of the device A and the slave device B and a preset first device determining condition, the slave device B as the first device and the master device A as the second device. Thereafter, an operating-type task for the target document is processed by the slave device B; and a presenting-type task for the target document is processed by the master device A.

The method for processing a document task provided in the present disclosure is simple and convenient to operate, and the document tasks are allocated to different devices, which fully utilizes the resources of different devices, improves the processing efficiency of the target document, and enhances the user experience.

In some embodiments, determining the first device in the master device and the slave device includes: determining the slave device in one or more devices that have communication connection capabilities with the master device; and determining the first device in the master device and the slave device.

As can be known from the definition of the master device and the slave device, once the target document is determined, the master device corresponding to the target document is determined. However, the slave device corresponding to the target document is undetermined and a determining process is required.

In this embodiment, the slave device is determined from the devices that have communication connection capabilities with the master device. Having a communication connection capability between devices is a prerequisite for the implementation of the technical solution of the present disclosure. Having a communication connection capability means that a device has a capability of a communication connection with the master device and the communication connection has not yet been realized. The slave device is determined from the devices having communication connection capabilities.

It should be noted that a device having a communication connection capability includes at least one of the following situations: (1) a device that is communicatively connectable with the master device and has not yet been communicatively connected; (2) a device that has been successfully communicatively connected with the master device; (3) a device that has been successfully communicatively connected with the master device but is presently disconnected; and (4) a device whose communication connection with the master device is interrupted, and is required to be re-determined. A communication connection is defined herein as constituting a communication between connected devices through a transmission interaction of signals. The device having the communication connection capability may be set according to actual needs and is not specifically limited herein.

There may be one or more slave devices. In the embodiments of the present disclosure, the slave device may be determined in two ways. In one way, the slave device is determined by manual operation. In the other way, the slave device is determined automatically. Each of the two ways of determining the slave device will be described in subsequent embodiments.

After the master device and the slave device have been determined, a first device may be further determined. There are various ways of determining the first device, such as the first device may be determined according to attributes of devices. For example, a device suitable for handheld operation by the user in the master device and the slave device can be determined as the first device; or a device with a keyboard and a mouse in the master device and the slave device can be determined as the first device; or the master device can be directly determined as the first device according to the user's instruction, which may be set according to actual needs, and is not specifically limited herein.

According to the method for processing a document task provided in the present disclosure, a slave device is determined from devices having communication connection capabilities with the master device, and then the first device is determined in the slave device and the master device. After the slave device is determined, the master device may transmit a target document to the slave device. In embodiments of the present disclosure, the device (i.e., the first device) having the operation processing authority for the target document may be the master device or the slave device, which is simple and convenient to operate, and improves the efficiency of collaborative processing of the same document between devices.

In some embodiments, determining the slave device in the devices that have communication connection capabilities with the master device includes:

determining, according to a target input instruction, the slave device in the devices that have communication connection capabilities with the master device.

In this embodiment, the target input instruction is instructing information input by the user to determine the slave device, which may be the selection of the slave device by the user on the operation interface, or the determination of the slave device by voice, air finger operation, and the like. After receiving the target input instruction, the master device determines the slave device according to information of devices having communication connection capabilities with the master device. In an embodiment, information of the device having the communication connection capability with the master device may be displayed on the master device, and thus the user may select the desired slave device according to the information, where the information of the device having the communication connection capability with the master device displayed on the master device includes the type, the model number, and the resolution of the device, whether the device is with a keyboard, whether the device can be handheld, and other information. In another example, the user may determine the slave device directly by voice, air finger operation, and the like.

In this embodiment, the master device selects a slave device for the target document according to the type of the task for the target document. For example, if the user needs the slave device to display a part of the table content in the target document, and a slave device with a higher resolution is required, then a device with a higher resolution is selected as the slave device for the target document from the devices that have the communication connection capabilities with the master device. Alternatively, the user needs the slave device that can be handheld, so that the user can hold the device to conveniently view the target document, then the device that can be handheld can be preferably selected, from the devices that have the communication connection capabilities with the master device, as the slave device for the target document.

It should be noted that the master device, after obtaining the attribute information of each device, analyzes and judges each device according to the attribute of each device and the characteristic of the target document, and determines the device that can meet the requirement for displaying the target document as the slave device after corresponding adjustment of each device, and at the same time, the master device needs to output a corresponding adjustment instruction to the slave device according to the attribute of the slave device and the characteristic of the target document. The specific information of the adjustment instruction can be set by the user according to actual needs and is not specifically limited here.

As shown in FIG. 2, the user manually selects a device on the master device that has communication connection capability with the master device as a slave device, so that the master device initiates flowing of a task to the slave device.

It should be noted that in this embodiment, the determination of the slave device may be determined manually, or the slave device may be automatically selected from the devices having communication connection capabilities with the master device, which is not limited herein.

According to the method for processing a document task provided in the present disclosure, based on the target input instruction, the slave device is determined from the devices having communication connection capabilities with the master device, which realizes that multiple devices simultaneously have the processing authorities for different tasks of the same document, improves the processing efficiency of the same document, and enhances the user experience.

In some embodiments, determining the slave device in the devices that have communication connection capabilities with the master device includes: calculating a distance between the master device and a third device, where the third device is any one of the one or more devices that have communication connection capabilities with the master device; and in response to determining that the distance is less than or equal to a distance threshold, determining the third device as the slave device; or, calculating a signal intensity between the master device and a third device; and in response to determining that the signal intensity is greater than or equal to a signal intensity threshold, determining the third device as the slave device.

In the previous embodiments, ways of determining the slave device by manual operation are described. In this embodiment, the method of automatically determining the slave device is described.

In this embodiment, the slave device may be automatically determined according to a distance between the master device and the third device, or according to a signal intensity between the master device and the third device.

For example, when there is a plurality of devices having communication connection capabilities with the master device, the slave device can be determined by calculating a distance between the master device and the third device or a signal intensity between the master device and the third device. In this embodiment, assuming that the distance threshold is 100 cm and only one slave device of the target document needs to be determined, it is calculated that the distance between the third device 1 and the master device A is 50 cm, and the distance between the third device 2 and the master device A is 56 cm. When both the third device 1 and the third device 2 satisfy the distance threshold, the third device that has the smallest distance from the master device can be selected as the slave device, i.e., the third device 1 can be determined as the slave device. When two slave devices need to be determined, the third device 1 and the third device 2 can be determined as the slave devices. It should be noted that the distance threshold can be set according to the actual need and is not specifically limited herein.

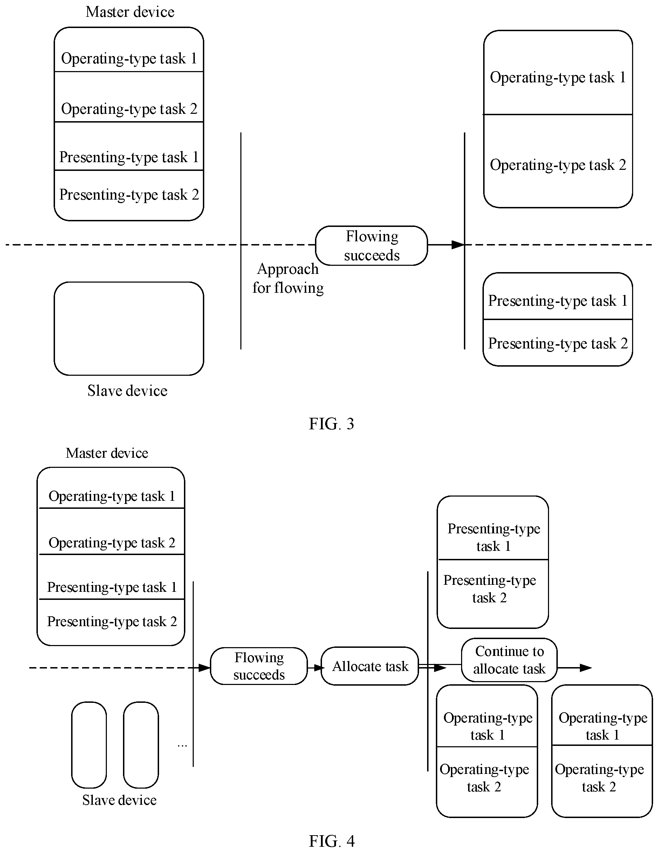

As shown in FIG. 3, when the distance between the third device and the master device is less than the pre-set distance threshold, the third device is determined as the slave device. Thus, the master device automatically flows some tasks for the target document to the slave device, such as the master device has the processing authorities of operating-type task 1, operating-type task 2, presenting-type task 1, and presenting-type task 2 for the target document. When the slave device is determined, the presenting-type task 1 and the presenting-type task 2 for the target document automatically flow to the slave device, so that the slave device has processing authorities for the presenting-type task 1 and the presenting-type task 2 for the target document.

In this embodiment, the slave device can also be determined by calculating the signal intensity between the third device and the master device. Signal intensity refers to the intensity of a signal used by a device such as a computer or a cellular phone, and the unit is dBm. Assuming that the signal intensity threshold is 100 dBm, it is calculated that the signal intensity between the third device 3 and the master device is 105 dBm, so that the third device 3 can be determined as the slave device for the target document.

It should be noted that there may also be a plurality of slave devices. As shown in FIG. 4, when a plurality of third devices in the devices having the communication connection capabilities with the master device satisfy the distance threshold or the signal intensity threshold, the plurality of third devices may be determined as the slave devices. In an embodiment, after the master device realizes the flowing of a task for a target document with one of the plurality of slave devices 1 , the slave device 1 is determined to be a first device and the master device to be a second device, and an operating-type task is allocated to the slave device 1, and after the task is allocated, the master device continues to select the next slave device 2 for the flowing of a task and allocates the corresponding task, and so on until the allocation of the tasks to all the slave devices is completed, the operation of flowing is terminated.

It should be noted that in this embodiment, the slave devices can also be automatically determined according to the characteristic of the target document, and the device with a corresponding attribute can be determined as the slave device. For example, the target document is a slide show, and there are two third devices closest to the master device, device 1 and device 2. The device 1 is in a portrait orientation, and the device 2 is in a landscape orientation, and since the characteristic of the target document is a PPT, which needs to be displayed in a landscape orientation to achieve the best effect, the device 2 in a landscape orientation is selected as the slave device.

It should be noted that in the processing operation of determining the slave device, the slave device can be determined by calculating the distance between the third device and the master device, or the slave device can be determined by calculating the signal intensity between the third device and the master device, which can be set by the user according to the actual needs, and will not be specifically limited herein. The slave device can be determined in either of the above two ways, which provides strong support for subsequent processing operations on the target document.

In some embodiments, determining the first device in the master device and the slave device includes: according to pre-set designating information, determining the master device as the first device.

In this embodiment, the designating information is information that pre-designates the master device as the first device. After the slave device is determined, the master device that pre-stores the target document is directly determined as the first device according to the pre-set designating information. As shown in FIG. 2, when the flow of tasks for the target document is completed between the master device and the slave device, the master device is determined to be the first device, and therefore, the master device has processing authorities for the operating-type task 1 and operating-type task 2 for the target document, and the slave device is determined as the second device with processing authorities for the presenting-type task 1 and presenting-type task 2 for the target document.

According to the method for processing a document task provided in the present disclosure, the master device is directly determined as the first device through the pre-set designating information, so that the master device maintains the processing authorities of the operating-type tasks for the target document, which realizes division of tasks among multiple devices, improves the efficiency of document processing, and enhances the user's experience.

In some embodiments, determining the first device in the master device and the slave device includes: obtaining device information of the master device and device information of the slave device; comparing the device information of the master device with the device information of the slave device; and according to a result of the comparing, determining the first device.

In this embodiment, after the master device and the slave device are determined, the slave device reports respective device information such as a type and a resolution of the device, and transmits the device information to the master device through a message instruction, and the master device compares and analyzes according to its own device information and the device information reported by the slave device, and determines the first device. The device information may include information such as the resolution of the device, whether the device is handheld, whether the device has a keyboard, and the like. For example, a device with a lower resolution may be selected from the master device and the slave device as the first device, or a handheld device may be selected from the master device and the slave device as the first device, or a device with a keyboard may be selected from the master device and the slave device as the first device, which may be set according to the actual needs, and will not be specifically limited herein.

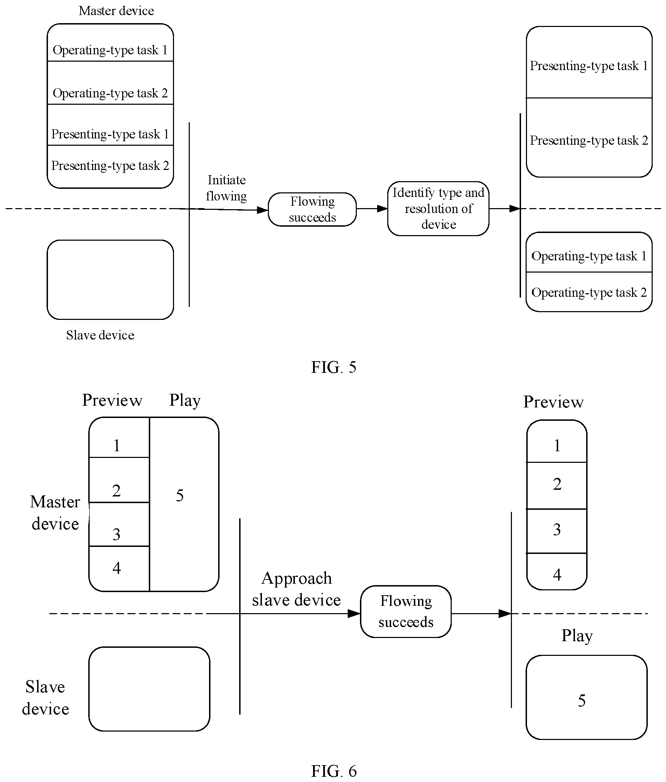

It should be noted that the first device may be the master device or the slave device. As shown in FIG. 5, the slave device is determined to be the first device according to the comparison result, the master device transmits a message instruction of serving as the first device to the slave device, the slave device receives the message instruction of serving as the first device and enters the interaction interface of the operating-type task, and thereupon, the slave device has processing authorities for the operating-type task 1 and the operating-type task 2 of the target document, and the master device enters the interaction interface for the presenting-type task and has processing authorities for the presenting-type task 1 and the presenting-type task 2 of the target document.

In this embodiment, the first device is determined according to the device information of the slave device and the device information of the master device. If it is determined according to the device information of the slave device that the slave device is suitable for processing operating-type tasks for the target document, processing authorities for operating-type tasks for the target document are allocated to the slave device, and processing authorities for presenting-type tasks for the target document are allocated to the master device. If it is determined according to the device information of the master device that the master device is suitable for processing operating-type tasks for the target document, processing authorities for operating-type tasks for the target document are allocated to the master device, and processing authorities for presenting-type tasks for the target document are allocated to the slave device.

According to the method for processing a document task provided in the present disclosure, by comparing the device information of the master device with the device information of the slave device, a first device is determined, which divides the tasks for the target document, improves the processing efficiency of the target document, and enhances the user experience.

In some embodiments, determining the first device in the master device and the slave device includes: according to sequence information for executing operating-type tasks for the target document, determining a device corresponding to a current number in the master device and the slave device as the first device. The sequence information includes numbers for executing the operating-type tasks.

In this embodiment, the operation and processing of the target document can be performed by multiple people and multiple devices in sequence. When the operation and processing of the target document are performed by multiple people and multiple devices in sequence, the sequence information for performing the operating-type tasks of the target document needs to be obtained, and then according to the obtained sequence information, the device corresponding to the current number is determined from the master device or the slave device, and the device corresponding to the current number is determined as the first device, and only after the device corresponding to the current number is determined as the first device, the device corresponding to the current number has the authority to process the operating-type tasks for the target document.

As shown in FIG. 4, the operating-type task can flow among multiple devices. For example, in the conference scenario, the master device A initiates the flowing for all users participating in the speeches, and in accordance with the sequence of the speeches, determines the device corresponding to the current number to be the first device, so as to realize the purpose of allocating the operating-type tasks in sequence. When the user having the master device A makes a speech, the master device A has the authority to process the operating-type task for the target document. At this time the master device A is the first device, and the other slave devices have the authorities for processing the presenting-type tasks for the target document. When the speech of the user of the master device A is over, the master device A continues to initiate the flowing of tasks, and the slave device 1 obtains the authority for processing the operating-type task for the target document. At this time the slave device 1 is the first device, the user having the slave device 1 can process the target document for editing operations, and the other slave devices and the master device A have the authorities for processing the presenting-type tasks for the target document, when the speech of the user having the slave device 1 is over, the master device A continues to initiate the flowing of tasks, determines that the next slave device corresponding to the next number is the first device. It proceeds in sequence until the end of the conference.

According to the method for processing a document task provided in the present disclosure, according to sequence information for executing operating-type tasks for the target document, a device corresponding to a current number in the master device and the slave device is determined as the first device, which realize operating and editing the target document in sequence, which can be applied to multi-person and multi-device application scenarios, improve the processing efficiency of the target document and improve the user experience.

In some embodiments, allocating the operating-type task for the target document to the first device, to enable the first device to process the operating-type task for the target document includes: allocating the operating-type task to the first device, to enable the first device to generate an interactive interface for the operating-type task; receiving execution information for the operating-type task transmitted by the first device; and processing the target document according to the execution information, where the execution information is generated according to operation information received by the interactive interface for the operating-type task.

In this embodiment, after the first device is determined, the operating-type task for the target document is allocated to the first device, so that the first device generates the interactive interface for the operating-type task, and then the target document is processed according to the obtained execution information for the operating-type task for the target document, the execution information including processing information such as adding, deleting, and modifying the target document. It should be noted that the execution information is generated according to the operation information received by the interactive interface for the operating-type task, and may be instructions for executing the deletion of a paragraph of the target document, the modification of a word of the target document, and the like.

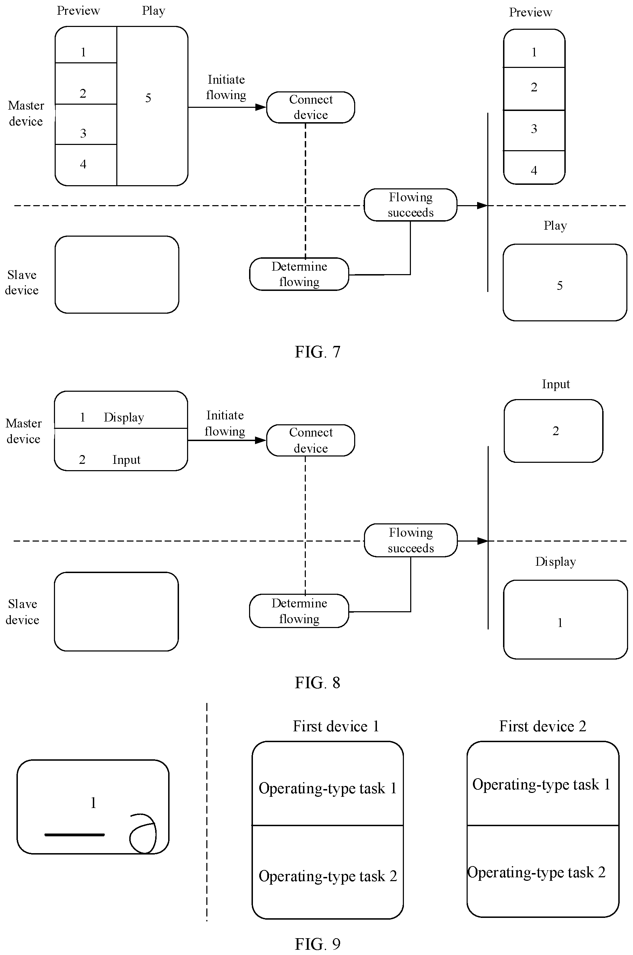

In the present embodiment, a specific application scenario of the method provided by the present implementation may be a document presentation scenario. As shown in FIG. 6, taking a slide show as an example, a slave device is determined in the devices close to the master device, and then the master device is determined as the first device, and then the operating-type task for the target document is allocated to the master device. At the same time, the master device generates an interactive interface for the operating-type task and generates corresponding execution information according to the received operation information for preview switching of the slides, and the first device performs preview switching of the slides according to the execution information. For example, slide 1 is currently displayed, and according to the execution information, it is switched to slide 2. The slave device generates an interactive interface for the presenting-type task and plays the corresponding slides, i.e., the slave device performs the task of playing the slides. As shown in FIG. 7, in a slide show application scenario, the slave device is selected by manual operation, and after the master device initiates a task flowing request, the master device establishes a communication connection with the selected slave device and determines the master device as the first device. The master device as the first device generates the interactive interface for the operating-type task, and the master device has the authority of "preview", and the slave device as the second device generates the interactive interface of the presenting-type task, and the slave device has the authority of "play". Each device realizes the corresponding task according to its respective authority.

In this embodiment, the application scenario of the method provided in this embodiment may also be a document editing scenario. As shown in FIG. 8, the slave device can be determined manually or automatically to realize the communication connection between the master device and the slave device, and then the editing function and the presentation function of the target document are allocated to the two devices for realization. When the master device is determined as the first device, an interactive interface for the operating-type task is generated in the master device for the user to input information for the operating and editing the target document; and an interactive interface for the presenting-type task is generated in the slave device to display the target document.

It should be noted that after the master device and the slave device determine their respective processing authorities, the master device and the slave device also need to generate the corresponding interactive interfaces. For multiple devices in the flowing of the tasks of the target document, display styles of these devices for a document are different, and the interactive interfaces can be respectively generated according to the different roles (the first device and the second device) of the devices. For example, different devices are abstracted into a basic flowing role (hereinafter referred to as BASE), and the first device and the second device are respectively extended to HOST and CLIENT according to the basic flowing role BASE. In an embodiment, an extension interface, an instruction set interface, and a general interface can be defined in the BASE, so that the HOST can dynamically add interface views required in the HOST state through the interfaces defined in the BASE, and at the same time, in the process of obtaining initialized abstract data, the data required for the operation and the state data of the various views are instantiated, so as to generate the interactive interface corresponding to the operating-type task of the target document.

According to the method for processing a document task provided in the present disclosure, the operating-type task is allocated to the first device to enable the first device to generate the interactive interface of the operating-type task, and then the target document is processed according to the execution information of the operating-type task, and the processing of the operating-type task of the target document is realized according to the generated interactive interface of the operating-type task, so as to improve the efficiency of the device in processing the document.

In an embodiment of the present disclosure, receiving the execution information for the operating-type task transmitted by the first device, and processing the target document according to the execution information includes: in response to determining that more than one piece of execution information transmitted by the first device is received at a same time, determining whether the more than one piece of execution information is associated with a same element in the target document; and in response to determining that the more than one piece of execution information is associated with the same element in the target document, determining a first execution information and processing the target document according to the first execution information, where the first execution information is one of the more than one piece of execution information associated with the same element in the target document.

In this embodiment, it is suitable for a situation where multiple people and multiple devices have operating-type tasks on the same target document at the same time. An element is the smallest processed object in the target document, such as a picture in a slide, a word in a document, and so on. When there are a plurality of devices simultaneously having authorities to perform an operating-type task on the target document, and to operate and process the same element of the target document at the same time, in this embodiment, the target document may be processed according to the determined first execution information. For example, the target document may be processed according to the occurrence time of the operation corresponding to the respective execution information of each device, and the target document may also be processed according to the needs of the user, and so on.

It should be noted that the same element refers to the same element in the target document, and if the objects to be processed at the same moment are not the same element, it can be processed according to the requirements in other embodiments, which are not described in detail herein.

It should be noted that if a plurality of first devices successively process the same element in the target document according to the execution information of the operating-type tasks, when the first first device finishes the execution, the second first device will then process the target document, and this processing method is valid.

According to the method for processing a document task provided in the present disclosure, if more than one piece of execution information for the operating-type tasks transmitted by the first device is received at the same moment, it is determined whether or not the more than one piece of execution information is associated with the same element in the target document, and in the case where the more than one piece of execution information is associated with the same element in the target document, the target document can be processed accordingly according to the determined first execution information, which can ensure the effectiveness of multiple devices in processing the same target document, improve the efficiency of target document processing, and enhance the user experience.

According to any one of the above embodiments, in this embodiment, in response to determining that the more than one piece of execution information is associated with the same element in the target document, determining the first execution information and processing the target document according to the first execution information includes: in response to determining that the more than one piece of execution information is associated with the same element in the target document, determining an occurrence time of an operation corresponding to each of the more than one piece of execution information; and determining execution information corresponding to an operation with an occurrence time that is ranked first in a sequence of the occurrence times as the first execution information, and processing the target document according to the first execution information.

In this embodiment, when pieces of execution information for operating-type tasks are simultaneously associated with the same element in a target document, it is necessary to determine the occurrence time of the operation corresponding to the respective piece of the execution information in each device, and the target document is processed according to the execution information corresponding to the operation having the earliest occurrence time. For example, the moments of receiving the pieces of execution information for the picture 1 in the target document transmitted by the device 1 and the device 2 are the same moment, which is 8:00:00 on September 10, 2021, and the occurrence time of the operation of the device 1 to add a dot to the picture 1 in the target document according to the execution information 1 is 7:59:58 on September 10, 2021, and the occurrence time of the operation of the device 2 to delete a word from the picture 1 in the target document according to the execution information 2 is 7:59:59 on September 10, 2021, then it is determined that the processing of the operation of the device 1 is valid, and according to the execution information corresponding to the operation of the device 1, the picture 1 in the target document is processed, i.e., a dot is added to the picture 1.

According to the method for processing a document task provided in the present disclosure, in response to determining that the more than one piece of execution information for the operating-type tasks is associated with the same element in the target document, an occurrence time of an operation corresponding to each of the more than one piece of execution information is determined; and operating-type-task execution information corresponding to an operation with an occurrence time that is ranked first in a sequence of the occurrence times is determined as the first execution information, and the target document is processed according to the first execution information, which can ensure the effectiveness of multiple devices in processing the same target document, improve the efficiency of target document processing, and enhance the user experience.

In some embodiments, in response to determining that the more than one piece of execution information is associated with the same element in the target document, determining the first execution information and processing the target document according to the first execution information includes: in response to determining that the more than one piece of execution information is associated with the same element in the target document, determining an occurrence time of an operation corresponding to each of the more than one piece of execution information; and storing the more than one piece of execution information in sequence according to an order of the occurrence times, and processing the target document according to the stored execution information.

In this embodiment, when the pieces of execution information for multiple operating-type tasks is associated with the same element in the target document at the same time, the occurrence time of the operation corresponding to the execution information of each device needs to be determined, and the pieces of execution information need to be stored according to the sequence of the occurrence times, and the target document can be processed according to the stored execution information, and the stored each piece of execution information can be sequentially determined as the first execution information according to the sequence of the occurrence times, and the target document is processed according to the first execution information. For example, the occurrence time of the execution information 1 of the operating-type task A of the device 1 is 8:43, the occurrence time of the execution information 2 of the operating-type task B of the device 2 is 8:45, and the occurrence time of the execution information 3 of the operating-type task C of the device 3 is 8:48. The server stores the obtained pieces of execution information in sequence according to the information of the occurrence times, i.e., the execution information 1 of the operating-type task A-the execution information 2 of the operating-type task B-the execution information 3 of the operating-type task C, and according to the stored information, the target document sequentially processed accordingly.

According to the method for processing a document task provided in the present disclosure, in response to determining that the more than one piece of execution information for operating-type tasks is associated with the same element in the target document, an occurrence time of an operation corresponding to each of the more than one piece of execution information for the operating-type tasks is determined; and the more than one piece of execution information for the operating-type tasks is stored in sequence according to an order of the occurrence times, and the target document is processed according to stored execution information, which can ensure the effectiveness of multiple devices in processing the same target document, improve the efficiency of target document processing, and enhance the user experience.

In some embodiments, in response to determining that the more than one piece of execution information is associated with the same element in the target document, determining the first execution information and processing the target document according to the first execution information includes:

in response to determining that the more than one piece of execution information is associated with the same element in the target document, processing the target document according to a received instruction.

In this embodiment, the instruction is generated by the user according to processing needs for the target document. When pieces of execution information for operating-type tasks are associated with the same element in the target document at the same time, the target document may also be processed according to the received user-needed instruction. For example, if the times of receiving the pieces of execution information for the picture 1 in the target document transmitted by the device 1 and the device 2 are the same moment, the execution information 1 of the operating-type task of the device 1 is drawing a line on the picture 1, and the execution information 2 of the operating-type task of the device 2 is deleting the picture 1. When the user determines, through judgment and analysis, to delete the picture 1, the device, after receiving the deletion instruction from the user, processes the target document according to the execution information 2.

According to the method for processing a document task provided in the present disclosure, in response to determining that the more than one piece of execution information is associated with the same element in the target document, processing the target document according to a received instruction, which can ensure the effectiveness of multiple devices in processing the same target document, improve the efficiency of target document processing, and enhance the user experience.

In some embodiments, receiving the execution information for the operating-type task transmitted by the first device, and processing the target document according to the execution information includes: in response to determining that the more than one piece of execution information is associated with different elements of the target document, processing the target document respectively according to the more than one piece of execution information.

This embodiment also applies to the case where multiple devices simultaneously have operating-type tasks for the target document. When pieces of execution information of operating-type tasks acquired simultaneously are for processing different elements of the target document, the validities of the pieces of execution information of operating-type tasks are kept, to enable simultaneous processing for different elements of the target document. As shown in FIG. 9, there are a first device 1 and a first device 2, and when the first device 1 performs the operating-type task 1 to mark the text 1 in the target document with a line, and the first device 2 performs the operating-type task 2 to process the text 2 in the target document with a check mark, the two execution information can be realized simultaneously.

For example, if the target document is a table, when a data inserting operation is performed on the target document, operation A is a data inserting operation on the cell of the first row and first column of the target document, and operation B is a data inserting operation on the cell of the first row and second column of the target document, and because the processing object of each operating-type task is not the same element, the data of the two operations are kept valid.

According to the method for processing a document task provided by the present disclosure, in response to determining that the more than one piece of execution information for operating-type tasks is associated with different elements of the target document, the target document is processed respectively according to the more than one piece of execution information for the operating-type tasks, which can ensure the effectiveness of multiple devices in simultaneously processing the same target document, improve the efficiency of target document processing, and enhance the user experience.

In some embodiments, allocating the presenting-type task for the target document to the second device in the master device and the slave device, to enable the second device to process the presenting-type task for the target document includes: allocating the presenting-type task for the target document to the second device, to enable the second device to generate a displaying interface for the presenting-type task and to display the target document in the displaying interface.

In this embodiment, after the first device is determined, the presenting-type task for the target document is allocated to the second device, and the second device generates the display interface for the presenting-type task for displaying the target document. It should be noted that the type and style to be displayed by the second device requires the first device to give corresponding instructing information, and the target document is displayed accordingly according to the received corresponding instructing information.

It should be noted that after determining respective processing authorities of the master device and the slave device, the master device and the slave device also need to generate the corresponding interactive interfaces. Multiple devices are abstracted into a basic flowing role, and the first device and the second device are extended to HOST and CLIENT respectively according to the basic flowing role BASE.

According to the method for processing a document task provided in the present disclosure, after the second device is determined, a presenting-type task for the target document is allocated to the second device, and the second device generates a corresponding display interface for displaying the target document, which can realize the diversity of the display of the target document and improve the user experience.

In some embodiments, allocating the presenting-type task for the target document to the second device in the master device and the slave device, to enable the second device to process the presenting-type task for the target document includes: in response to determining that a processed target document needs to be displayed by the presenting-type task, transmitting the processed target document to the second device, to display the processed target document on the displaying interface for the presenting-type task of the second device; where the processed target document is obtained by processing the target document according to the execution information of the operating-type task.

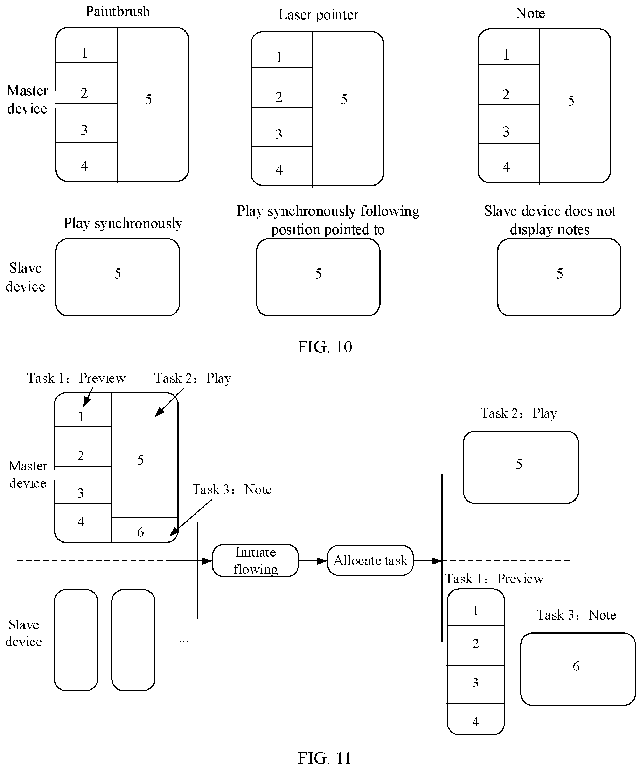

In this embodiment, after the first device processes the target document, the processed target document needs to be displayed in the second device, and the second device displays the processed target document updated in real time. As shown in FIG. 10, taking a slide show as an example, the commonly used tools for presentation can be quickly invoked in the first device, including notes, paintbrushes, laser pointers, etc., and when the first device processes the target document, the second device can display in real time the contents of the processing of the target document and the corresponding operation steps.

According to the method for processing a document task provided in the present disclosure, after the first device processes the target document, the second device needs to display the processed target document, which can ensure real-time update processing of the data, realize synchronization between the operating-type task and the presenting-type task, and ensure the timeliness of the data.

In some embodiments, allocating the presenting-type task for the target document to the second device in the master device and the slave device, to enable the second device to process the presenting-type task for the target document includes: in response to determining that a processed target document does not need to be displayed by the presenting-type task, not transmitting the processed target document to the second device.

In this embodiment, when the first device operates and processes the target document, some of the operations and processing is not required to be displayed by the second device, such as the modified part of the target document is the information of the note. Still taking the slide show as an example, as shown in FIG. 11, the master device is the second device, and the slave device is the first device. When the first device modifies the information of the not for task 3, the second device does not need to display the modification of the information of the note, therefore, the processed target document is not transmitted to the second device, and the master device, which is the second device, when playing the target document, does not play the information of the note of the target document.

According to the method for processing a document task provided in the present disclosure, after the first device operates and processes the target document, and when the modified part does not need the second device for display, the processed target document is not transmitted to the second device, which ensures the accuracy of the data of the target document, and at the same time, avoids occupying unnecessary resources, and saves resources.

In some embodiments, the master device determines a slave device by means of manual flowing or automatic flowing, the first device and the second device are determined in the slave device and the master device by a specified method or by a sequence according to device information, and then the operating-type task for the target document is allocated to the first device and the presenting-type task is allocated to the second device. The first device and the second device generate corresponding interactive interfaces according to the task types.

Taking the slide show as an example, the master device initiates flowing for multiple slave devices, and after successful communication connections, the master device maintains a list of tasks and all devices; after the master device receives the connection status and device information of the slave devices, devices are sorted, by default, in descending order based on information of types and resolutions of the devices, and the device with a lower resolution is allocated an operating-type task by default, i.e., the device with a lower resolution is determined to be the first device. If the master device is one of the devices with lower resolution, operating-type tasks are allocated priority to the master device. It should be noted that on the master device, a task panel can also be clicked to manually adjust the type of task performed by each device.

The master device also needs to transmit a view switching message to the second device, and the view switching message includes a view switching instruction and a view style to be displayed. After receiving the message, the second device parses the view switching message, finds the view style to be loaded, hides the original view style, and displays the view style requested in the view switching message. After the second device completes the switching of the document view, the second device transmits current status information (including the device ID, the view style, and whether the switching is successful or not) to the master device, and the master device, after receiving the status information from the receiving end, updates the device information and the document view information maintained by the master device. It should be noted that if the connection of a slave device is interrupted, the master device will initiate a request for reconnection, and if the reconnection is successful, it will be displayed normally; if the connection fails after a timeout, the master device will remove the device information from the device list.

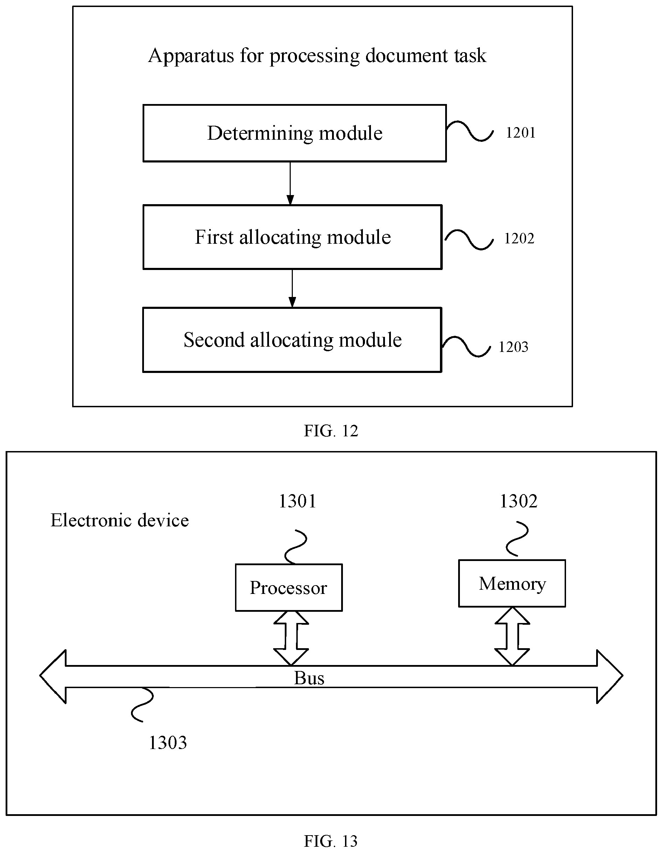

FIG. 12 shows an apparatus for processing a document task provided by the present disclosure. As shown in FIG. 12, the apparatus includes:
a determining module 1201, configured to determine a first device in a master device and a slave device, where the master device initiates flowing for a target document, the slave device receives the target document, and the first device is used to perform an operation on the target document;
a first allocating module 1202, configured to allocate an operating-type task for the target document to the first device, to enable the first device to process the operating-type task for the target document; and
a second allocating module 1203, configured to allocate a presenting-type task for the target document to a second device in the master device and the slave device, to enable the second device to process the presenting-type task for the target document.

According to any one of the above embodiments, in this embodiment, the determining module 1201 is further configured to:
determine the slave device in devices that have communication connection capabilities with the master device; and
determine a first device in a master device and a slave device.

According to any one of the above embodiments, in this embodiment, the determining module 1201 is further configured to:
determining, according to a target input instruction, the slave device for the target document in the devices that have communication connection capabilities with the master device.

According to any one of the above embodiments, in this embodiment, the determining module 1201 is further configured to:
calculate a distance between the master device and a third device, where the third device is any one of the one or more devices that have communication connection capabilities with the master device; and
in response to determining that the distance is less than or equal to a distance threshold, determine the third device as the slave device;
   or,
calculate a signal intensity between the master device and a third device, where the third device is any one of the one or more devices that have communication connection capabilities with the master device; and
in response to determining that the signal intensity is greater than or equal to a signal intensity threshold, determine the third device as the slave device.

According to any one of the above embodiments, in this embodiment, the determining module 1201 is further configured to:
according to pre-set designating information, determine the master device as the first device.

According to any one of the above embodiments, in this embodiment, the determining module 1201 is further configured to:
obtain device information of the master device and device information of the slave device;
compare the device information of the master device with the device information of the slave device; and according to a result of the comparing, determine the first device.

According to any one of the above embodiments, in this embodiment, the determining module 1201 is further configured to:
according to sequence information for executing operating-type tasks for the target document, determine a device corresponding to a current number in the master device and the slave device as the first device, where the sequence information includes numbers for executing the operating-type tasks.

According to any one of the above embodiments, in this embodiment, the first allocating module 1202 is further configured to:
allocate the operating-type task to the first device, to enable the first device to generate an interactive interface for the operating-type task;
receive execution information for the operating-type task transmitted by the first device; and process the target document according to the execution information, where the execution information is generated according to operation information received by the interactive interface for the operating-type task.

According to any one of the above embodiments, in this embodiment, the first allocating module 1202 is further configured to:
in response to determining that more than one piece of execution information transmitted by the first device is received at a same time, determine whether the more than one piece of execution information is associated with a same element in the target document; and
in response to determining that the more than one piece of execution information is associated with the same element in the target document, determine a first execution information and process the target document according to the first execution information, where the first execution information is one of the more than one piece of execution information associated with the same element in the target document.

According to any one of the above embodiments, in this embodiment, the first allocating module 1202 is further configured to:
in response to determining that the more than one piece of execution information is associated with the same element in the target document, determine an occurrence time of an operation corresponding to each of the more than one piece of execution information; and
determine execution information corresponding to an operation with an occurrence time that is ranked first in a sequence of the occurrence times as the first execution information, and process the target document according to the first execution information.

According to any one of the above embodiments, in this embodiment, the first allocating module 1202 is further configured to:
in response to determining that the more than one piece of execution information is associated with the same element in the target document, determine an occurrence time of an operation corresponding to each of the more than one piece of execution information; and
store the more than one piece of execution information in sequence according to an order of the occurrence times, and process the target document according to the stored execution information.

According to any one of the above embodiments, in this embodiment, the first allocating module 1202 is further configured to:
in response to determining that the more than one piece of execution information is associated with the same element in the target document, process the target document according to a received instruction.

According to any one of the above embodiments, in this embodiment, the first allocating module 1202 is further configured to:

In response to determining that the more than one piece of execution information is associated with different elements of the target document, process the target document respectively according to the more than one piece of execution information.

According to any one of the above embodiments, in this embodiment, the second allocating module 1203 is further configured to:
allocate the presenting-type task for the target document to the second device, to enable the second device to generate a displaying interface for the presenting-type task; and display the target document in the displaying interface.

According to any one of the above embodiments, in this embodiment, the second allocating module 1203 is further configured to:
in response to determining that a processed target document needs to be displayed by the presenting-type task, transmit the processed target document to the second device, to display the processed target document on the displaying interface for the presenting-type task of the second device;
where the processed target document is obtained by processing the target document according to the execution information of the operating-type task.

According to any one of the above embodiments, in this embodiment, the second allocating module 1203 is further configured to:
in response to determining that a processed target document does not need to be displayed by the presenting-type task, not transmit the processed target document to the second device; where the processed target document is obtained by processing the target document according to the execution information of the operating-type task.

Since the apparatuses described in the embodiments of the present disclosure has the same principles and effects as the methods described in the above embodiments, the contents of more detailed explanations will not be repeated herein.

FIG. 13 is a schematic diagram of the entity structure of an electronic device provided in embodiments of the present disclosure. As shown in FIG. 13, the present disclosure provides an electronic device including: a processor 1301, a memory 1302, and a bus 1303;
the processor 1301, the memory 1302 accomplish communication with each other via the bus 1303;

The processor 1301 is used to invoke program instructions in the memory 1302, to execute the method provided in each of the above method embodiments. For example, the method includes: determining a first device in a master device and a slave device; where the master device initiates flowing for a target document and stores the target document in advance, the slave device receives the flowing and is able to perform a task for the target document after the flowing is successful, and the first device performs an operation on the target document; allocating an operating-type task for the target document to the first device, to enable the first device to process the operating-type task for the target document; and allocating a presenting-type task for the target document to a second device in the master device and the slave device, to enable the second device to process the presenting-type task for the target document.

Embodiments of the present disclosure provide a non-transitory computer-readable storage medium. The non-transitory computer-readable storage medium stores computer instructions. The computer instructions cause the computer to perform the method provided in each of the above embodiments of the method. For example, the method includes: determining a first device in a master device and a slave device; where the master device initiates flowing for a target document and stores the target document in advance, the slave device receives the flowing and is able to perform a task for the target document after the flowing is successful, and the first device performs an operation on the target document; allocating an operating-type task for the target document to the first device, to enable the first device to process the operating-type task for the target document; and allocating a presenting-type task for the target document to a second device in the master device and the slave device, to enable the second device to process the presenting-type task for the target document.

The present disclosure further provides a computer program product. The computer program product includes a computer program stored on a non-transitory computer-readable storage medium. The computer program includes program instructions. When the program instructions are executed by a computer, the computer performs the method provided by each of the methods described above. The method includes: determining a first device in a master device and a slave device; where the master device initiates flowing for a target document and stores the target document in advance, the slave device receives the flowing and is able to perform a task for the target document after the flowing is successful, and the first device performs an operation on the target document; allocating an operating-type task for the target document to the first device, to enable the first device to process the operating-type task for the target document; and allocating a presenting-type task for the target document to a second device in the master device and the slave device, to enable the second device to process the presenting-type task for the target document.

A person of ordinary skill in the art may understand that all or part of the steps for realizing the above-described method embodiments may be accomplished by hardware associated with program instructions, and the foregoing program may be stored in a computer-readable storage medium, and when the program is executed, the program executes the steps including the above-described method embodiments; and the foregoing storage medium includes a medium that can store program code, such as: a ROM, a RAM, a diskette, or a CD-ROM, and so forth.

Finally, it should be noted that the above embodiments are only used to illustrate the technical solutions of the present disclosure, and are not intended to limit the technical solutions; although the present disclosure has been described in detail with reference to the foregoing embodiments, a person of ordinary skill in the art should understand that modifications can be made to the technical solutions recorded in the foregoing embodiments, or equivalent substitutions can be made for some of the technical features; and such modifications or substitutions do not detract from the essence and scope of the respective technical solutions of the embodiments of the present disclosure.

## Claims

1. A method for processing a document task, comprising:
determining a first device in a master device and a slave device, wherein the master device initiates flowing for a target document, the slave device receives the target document, and the first device is used to perform an operation on the target document;
allocating an operating-type task for the target document to the first device, to enable the first device to process the operating-type task for the target document; and
allocating a presenting-type task for the target document to a second device in the master device and the slave device, to enable the second device to process the presenting-type task for the target document.

2. The method according to claim 1, wherein determining the first device in the master device and the slave device comprises:
determining the slave device in one or more devices that have communication connection capabilities with the master device; and
determining the first device in the master device and the slave device.

3. The method according to claim 2, wherein determining the slave device in the one or more devices that have communication connection capabilities with the master device comprises:
determining, according to a target input instruction, the slave device in the one or more devices that have communication connection capabilities with the master device.

4. The method according to claim 2, wherein determining the slave device in the one or more devices that have communication connection capabilities with the master device comprises at least one of:
calculating a distance between the master device and a third device, wherein the third device is any one of the one or more devices that have communication connection capabilities with the master device; and in response to determining that the distance is less than or equal to a distance threshold, determining the third device as the slave device; or
calculating a signal intensity between the master device and a third device, wherein the third device is any one of the one or more devices that have communication connection capabilities with the master device; and in response to determining that the signal intensity is greater than or equal to a signal intensity threshold, determining the third device as the slave device.

5. The method according to claim 2, wherein determining the first device in the master device and the slave device comprises:
according to pre-set designating information, determining the master device as the first device.

6. The method according to claim 2, wherein determining the first device in the master device and the slave device comprises:
obtaining device information of the master device and device information of the slave device;
comparing the device information of the master device with the device information of the slave device; and
according to a result of the comparing, determining the first device.

7. The method according to claim 2, wherein determining the first device in the master device and the slave device comprises:
according to sequence information for executing operating-type tasks for the target document, determining a device corresponding to a current number in the master device and the slave device as the first device, wherein the sequence information comprises numbers for executing the operating-type tasks.

8. The method according to claim 1, wherein allocating the operating-type task for the target document to the first device, to enable the first device to process the operating-type task for the target document comprises:
allocating the operating-type task to the first device, to enable the first device to generate an interactive interface for the operating-type task;
receiving execution information for the operating-type task transmitted by the first device; and processing the target document according to the execution information, wherein the execution information is generated according to operation information received by the interactive interface for the operating-type task.

9. The method according to claim 8, wherein receiving the execution information for the operating-type task transmitted by the first device, and processing the target document according to the execution information comprises:
in response to determining that more than one piece of execution information transmitted by the first device is received at a same time, determining whether the more than one piece of execution information is associated with a same element in the target document; and
in response to determining that the more than one piece of execution information is associated with the same element in the target document, determining a first execution information and processing the target document according to the first execution information, wherein the first execution information is one of the more than one piece of execution information associated with the same element in the target document.

10. The method according to claim 9, wherein in response to determining that the more than one piece of execution information is associated with the same element in the target document, determining the first execution information and processing the target document according to the first execution information comprises:
in response to determining that the more than one piece of execution information is associated with the same element in the target document, determining an occurrence time of an operation corresponding to each of the more than one piece of execution information; and
determining execution information corresponding to an operation with an occurrence time that is ranked first in a sequence of the occurrence times as the first execution information, and processing the target document according to the first execution information.

11. The method according to claim 9, wherein in response to determining that the more than one piece of execution information is associated with the same element in the target document, determining the first execution information and processing the target document according to the first execution information comprises:
in response to determining that the more than one piece of execution information is associated with the same element in the target document, determining an occurrence time of an operation corresponding to each of the more than one piece of execution information; and
storing the more than one piece of execution information in sequence according to an order of the occurrence times, and processing the target document according to the stored execution information.

12. The method according to claim 9, wherein in response to determining that the more than one piece of execution information is associated with the same element in the target document, determining the first execution information and processing the target document according to the first execution information comprises:
in response to determining that the more than one piece of execution information is associated with the same element in the target document, processing the target document according to a received instruction.

13. The method according to claim 9, wherein receiving the execution information for the operating-type task transmitted by the first device, and processing the target document according to the execution information comprises:
in response to determining that the more than one piece of execution information is associated with different elements of the target document, processing the target document respectively according to the more than one piece of execution information.

14. The method according to claim 1, wherein allocating the presenting-type task for the target document to the second device in the master device and the slave device, to enable the second device to process the presenting-type task for the target document comprises:
allocating the presenting-type task for the target document to the second device, to enable the second device to generate a displaying interface for the presenting-type task and to display the target document in the displaying interface.

15. The method according to claim 14, wherein allocating the presenting-type task for the target document to the second device in the master device and the slave device, to enable the second device to process the presenting-type task for the target document comprises:
in response to determining that a processed target document needs to be displayed by the presenting-type task, transmitting the processed target document to the second device, to display the processed target document on the displaying interface for the presenting-type task of the second device; wherein the processed target document is obtained by processing the target document according to the execution information of the operating-type task.

16. The method according to claim 14, wherein allocating the presenting-type task for the target document to the second device in the master device and the slave device, to enable the second device to process the presenting-type task for the target document comprises:
in response to determining that a processed target document does not need to be displayed by the presenting-type task, not transmitting the processed target document to the second device; wherein the processed target document is obtained by processing the target document according to the execution information of the operating-type task.

17. An apparatus for processing a document task, comprising:
a determining module, configured to determine a first device in a master device and a slave device, wherein the master device initiates flowing for a target document, the slave device receives the target document, and the first device is used to perform an operation on the target document;
a first allocating module, configured to allocate an operating-type task for the target document to the first device, to enable the first device to process the operating-type task for the target document; and
a second allocating module, configured to allocate a presenting-type task for the target document to a second device in the master device and the slave device, to enable the second device to process the presenting-type task for the target document.

18. An electronic device, comprising:
one or more processors;
one or more memories; and
a bus;
wherein the one or more processors and the one or more memories communicate with each other via the bus; and the one or more memories store program instructions executable by the one or more processors, and the one or more processors invoke the program instructions to perform the method for processing a document task according to any one of claims 1 to 16.

19. A non-transitory computer-readable storage medium, wherein the non-transitory computer-readable storage medium stores computer instructions, and the computer instructions enable a computer to perform the method for processing a document task according to any one of claims 1 to 16.
